Europäisches Patentamt

European Patent Office

Office européen des brevets

(11) Numéro de publication : **0 329 604 B1**

# (12) FASCICULE DE BREVET EUROPEEN

(45) Date de publication du fascicule du brevet :
**20.05.92 Bulletin 92/21**

(51) Int. Cl.$^5$ : **C21D 9/26,** C21D 1/09,
B23K 26/06

(21) Numéro de dépôt : **89810084.7**

(22) Date de dépôt : **01.02.89**

(54) **Procédé de trempe d'élements semblables distincts solidaires d'un support commun et régulièrement espacés les uns des autreset dispositif pour la mise en oeuvre de ce procédé.**

(30) Priorité : **02.02.88 CH 349/88**

(43) Date de publication de la demande :
**23.08.89 Bulletin 89/34**

(45) Mention de la délivrance du brevet :
**20.05.92 Bulletin 92/21**

(84) Etats contractants désignés :
**AT BE CH DE ES FR GB GR IT LI LU NL SE**

(56) Documents cités :
**EP-A- 0 174 915**
**DE-A- 1 783 058**
**DE-A- 3 600 570**
**GB-A- 2 139 614**

(56) Documents cités :
**US-A- 3 757 078**
**PATENT ABSTRACTS OF JAPAN, vol. 9, no. 331 (C-321)[2054], 25 décembre 1985; & JP- A-60 159 112 (SHIN NIPPON SEITETSU K.K.)20-08-1985**

(73) Titulaire : **Graf & Cie. A.-G.**
**Alte Jonastrasse**
**CH-8640 Rapperswil (CH)**

(72) Inventeur : **Zuercher, Erwin**
**Avenue du Lignon 21**
**CH-1219 Le Lignon (CH)**

(74) Mandataire : **Dousse, Blasco et al**
**7, route de Drize**
**CH-1227 Carouge/Genève (CH)**

EP 0 329 604 B1

## Description

La présente invention se rapporte à un procédé de trempe d'éléments semblables distincts, solidaires d'un support commun et régulièrement espacés les uns des autres, notamment des dents d'un organe denté, selon lequel on forme un faisceau laser, on définit une trajectoire de déplacement desdits éléments, on dirige ce faisceau laser en un point de cette trajectoire et on renvoie la lumière réfléchie par ces éléments contre cette même trajectoire, ainsi qu'à un dispositif pour la mise en oeuvre de ce procédé.

Dans la description qui va suivre, la trempe d'éléments semblables distincts se référera essentiellement et à titre d'exemple à des dents et, en particulier, à des dents d'un ruban de garniture de carde. Il est cependant évident pour l'homme de métier que ce procédé est applicable à toutes sortes de petits éléments, telles que des pièces de micro mécanique qui seraient reliées amoviblement, à un support commun destiné à les faire défiler le long d'une même trajectoire.

La trempe des dents d'un ruban de garniture de carde est une opération extrêmement délicate, étant donné que seule l'extrémité de la dent doit être trempée alors que la base de la dent ne doit pas l'être, le gradient de dureté devant affecter une zone aussi réduite que possible entre les parties trempées et non trempées. Actuellement, cette opération s'effectue à l'aide d'un chalumeau. La vitesse maximum qui peut être atteinte avec ce mode de chauffage est de ~10 m/mn. La zone de transition affectée par un gradient de dureté est relativement étroite, sans qu'il soit possible cependant de la réduire autant qu'il serait souhaitable. En effet, compte tenu du fait que ce procédé de trempe est utilisé depuis des décennies, on peut admettre que l'on a atteint les limites inhérentes à ce mode de chauffage, tant en ce qui concerne la vitesse, la réduction de la zone de transition que la dureté.

Il a déjà été proposé dans le GB 2 139 614 un dispositif de découpe du verre par choc thermique, utilisant un faisceau laser, dans lequel la portion de l'énergie lumineuse qui à traversé la plaque de verre est réfléchie par un miroir contre cette plaque de verre. A nouveau, une partie de l'énergie réfléchie sera absorbée par cette plaque de verre et une autre partie la traversera. Cette partie résiduelle d'énergie est alors ramenée vers le laser ce qui perturbe son fonctionnement.

On a également proposé dans le EP-0 174 915 un appareil pour effectuer le traitement de pièces métalliques se déplaçant sur une trajectoire, à l'aide d'un faisceau laser, comprenant un miroir ménagé sur la face interne d'une calotte semi-elliptique. Cette calotte présente une ouverture pour permettre le passage du faisceau laser qui est dirigé contre l'un des foyers de l'ellipse, situé le long de la trajectoire des pièces métalliques, sous un angle oblique afin que la portion réfléchie d'énergie lumineuse ne retourne pas vers le laser. Selon cette solution, l'énergie réfléchie au premier foyer est renvoyée par le miroir vers le second foyer, mais ensuite, après une nouvelle réflexion contre le miroir ellipsoïdal puis contre la surface à traiter, le faisceau résiduel est renvoyé vers l'ouverture par laquelle il est entré.

Si cette seconde solution évite les inconvénients de la première solution mentionnée, elle ne permet cependant pas d'emprisonner toute l'énergie du faisceau laser, qui finit par ressortir par où il est entré, mais sous un autre angle, ni de renvoyer les portions réfléchies de ce faisceau en un même point de la trajectoire des pièces métalliques; à chaque réflexion, l'énergie lumineuse est dirigée en un point différent de cette trajectoire.

En effet, pour obtenir un trempage uniforme parfaitement délimité et pratiquement sans gradient de dureté, notamment de dents découpées sur le bord d'un ruban, il est nécessaire, compte tenu de la densité d'énergie élevée à disposition, de chauffer ces dents simultanément sur toute leur surface pendant un temps très court. Ce mode de chauffage assure une meilleure répartition de la chaleur et permet, en même temps, de réduire la durée d'irradiation, compte tenu de l'augmenta tion du rendement, évitant par la même occasion de brûler les arrêtes des dents.

Le but de la présente invention est de proposer une solution qui permette de mettre en oeuvre un tel chauffage, réalisant ainsi un progrès appréciable tant en ce qui concerne la productivité que la qualité du produit.

A cet effet, cette invention a pour objet d'une part, un procédé de trempe d'éléments semblables distincts, solidaires d'un support commun et régulièrement espacés l'un de l'autre selon la revendication 1, et d'autre part un dispositif selon la revendication 4, pour la mise en oeuvre du procédé.

Le dessin annexé illustre, très schématiquement et à titre d'exemple, une forme d'exécution du dispositif pour la mise en oeuvre du procédé objet de l'invention.

La fig 1 est une vue en perspective de ce dispositif.

Les figs 2a et 2b sont des schémas illustrant le mode de réflexion.

La fig 3 est un diagramme de dureté passant par un élément et selon la direction transversale de la trajectoire décrite par cet élément.

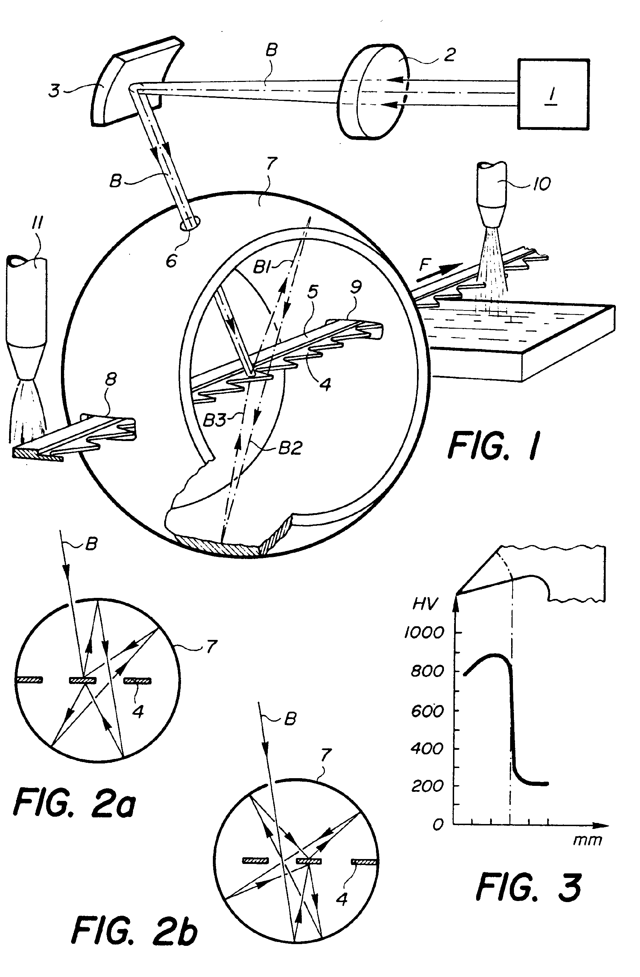

Le dispositif illustré par la figure 1 comporte une source de rayonnement laser 1, une lentille 2 pour produire un faisceau convergent de lumière cohérente B, un premier miroir 3 en forme de portion de cylindre pour diriger le faisceau B vers la trajectoire d'une denture 4 d'un ruban de garnissage de carde 5. Ce miroir 3 en forme de portion de cylindre a pour effet de donner au faisceau B une forme elliptique dont on oriente le grand axe parallèlement à la direction longitudinale du ruban de garnissage de carde 5. Le faisceau B de forme elliptique pourrait également être formé à l'aide d'une lentille cylindrique sans réflexion quin'induit pas d'aberration du faisceau laser. Entre le miroir 3 et ce ruban de garnissage de carde 5, le faisceau B traverse une ouverture 6 ménagée dans une sphère creuse 7 dont la face interne est formée par un miroir qui entoure une portion de la trajectoire de ce ruban de carde 5 et qui présente une ouverture d'entrée 8 et une ouverture de sortie 9. L'ouverture 6 pour le passage du faisceau B à travers la paroi de la sphère creuse 7 ainsi que les ouvertures d'entrée 8 et de sortie 9 du ruban de garnis sage de carde 5 sont situées dans un plan diamétral commun de la sphère creuse 7. A la sortie de ce miroir sphérique 7, le ruban de carde 5 passe à travers un poste de refroidissement comprenant une buse 10 de pulvérisation d'eau .

En amont de la sphère creuse 7 un brûleur à gaz 11 sert au préchauffage du ruban 5. Le rôle de ce préchauffage est double; d'une part, il sert à élever la température du ruban de sorte que l'énergie à fournir par le faisceau laser est plus faible et que la vitesse peut de ce fait être accrue, et, d'autre part, la couleur de l'acier qui devient bleu foncé rend sa surface plus absorbante au rayonnement du faisceau laser augmentant le rendement.

Pour obtenir une trempe d'une zone déterminée avec précision de la denture 4 du ruban de garnissage de carde 5 et une transition aussinette que possible entre parties trempée et non trempée, il est nécessaire que le chauffage de la partie à tremper soit aussi rapide et homogène que possible. C'est la raison pour laquelle on fait passer le ruban 5 dans une sphère creuse 7, dont la face interne est un miroir qui a pour but de renvoyer la portion de lumière réfléchie par les dents 4 du ruban 5 contre ces mêmes dents. Compte tenu des espaces qui séparent ces dents les unes des autres, on peut faire en sorte que la lumière B1 réfléchie par le dessus d'une dent 4 soit renvoyée par le miroir sphérique 7 entre deux dents selon la trajectoire B2 et vienne frapper le miroir 7 pour être renvoyée contre la face inférieure de la dent 4 selon la trajectoire B3.

Ces réflexions de lumière peuvent être multiples, comme illustré par les figures 2a et 2b. La figure 2a montre les réflexions du faisceau lumineax B dans le cas où le faisceau entrant dans le miroir sphérique frappe directement une dent 4. La figure 2b montre ces réflexions lorsque le faisceau entrant B passe entre deux dents 4 et rencontre tout d'abord le miroir 7. Comme on le voit, le miroir sphérique 7 constitue un véritable piège pour le faisceau lumineux entrant. Bien entendu, à chaque réflexion par les dents 4, une portion de l'énergie lumineuse du faisceau laser est absorbée et chauffe la dent. Pour obtenir cette réflexion multiple du faisceau laser B, celui-ci est dirigé vers les dents du ruban 5 dont la trajectoire passe par un plan diamétral de la sphère 7 en touchant cette trajectoire, une fraction du pas des dents 4 en amont on en aval du centre de la sphère. Dans cet exemple, la fraction en question est de préférence égale à 1/4 de pas. Grâce à cette précaution, la portion de rayonnement qui passe entre deux dents 4 est réfléchie par la sphère 7 contre la face opposée de ces dents 4, garantissant un chauffage homogène de ces dents. Comme on peut l'observer en comparant les figures 2a et 2b, les points de la trajectoire des dents 4, sur lesquels les réflexions du faisceau B sont dirigées, sont symétriques par rapport au centre de la sphère 7. Suivant que ce faisceau rencontre d'abord une dent 4 (fig 2a) ou le miroir 7 (fig 2b), ce point est en effet à gauche ou à droite du centre de cette sphère 7. De préférence, le faisceau laser B est dirigé contre la trajectoire du ruban 5 en formant un léger angle avec la verticale à cette trajectoire pour éviter la réflexion vers la source de rayonnement qui la perturberait.

Dès que ces dents quittent la zone d'irradiation, la chaleur concentrée dans l'extrémité des dents reflue vers la base de ces dents et le ruban 5 dans lequel elles sont découpées. Compte tenu de la conductibilité thermique de l'acier et du rapport de masse entre la zone chauffée et les parties plus froides du ruban, ce reflux de chaleur est si rapide qu'il produit la trempe des extrémités des dents 4 avant que le ruban 5 ne soit davantage refroidi par le jet d'eau projeté par la buse 10.

Le procédé a été mis en oeuvre avec succès avec un ruban de garnissage de carde dont les dents ont un pas de 1,5 mm en utilisant un faisceau laser de 250 Watt. Ces dents ont une épaisseur de 0,2 mm, une hauteur de 0,6 mm et la dimension du spot elliptique de lumière cohérente est approximativement de 0,2 - 0,3 x 1 mm, le grand axe étant parallèle au ruban de garnissage de carde 5. Le centre de ce spot est à 0,375 mm ($\frac{1}{4}$ de pas) en amont du centre du miroir sphérique 7 par rapport au sens d'avance F du ruban 5. La vitesse de déplacement de ce ruban est de 15 m/mn.

Le diagramme de la figure 3 représente en ordonnée la dureté HV en degré Vickers en fonction de la distance à partir de la pointe de la dent. Ce diagramme montre que la transition est étonnamment brusque entre la partie trempée et la partie non trempée. La vitesse de production qui, dans cet exemple, est de 15 m/mn n'est limitée que par la puissance du laser utilisé. Cette vitesse pourrait être doublée avec un laser de 500 Watt. Un tel gain de productivité, comparé à la vitesse actuelle de 10 m/mn avec le procédé à la flamme, justifie l'investissement que représente le laser, celui-ci pouvant être amorti dans un délai raisonnable. Le gain réalisé en productivité est accompagné d'une amélioration de la régularité et de la qualité, donc d'un produit de plus grande valeur marchande. Compte tenu de l'ancienneté de la technologie traditionnelle, on peut en effet admet-

3

EP 0 329 604 B1

tre que les performances obtenues sur le plan de la qualité, comme sur celui de la productivité, ne sont plus guère perfectibles et se situent assez loin de la technique proposée ici et dont toutes les ressources n'ont pas encore été explorées jusqu'ici.

Comme on a pu le constater à la lecture de la description qui précède, le procédé ainsi que le dispositif objets de l'invention comportent des avantages importants. Ces avantages découlent essentiellement de l'utilisation d'un miroir sphérique qui permet une utilisation optimale de l'énergie rayonnante. La partie de cette énergie rayonnante qui est réfléchie par la surface irradiée est réfléchie par le miroir contre le même objet, de sorte que l'objet à traiter peut être brillant et n'a pas besoin d'être recouvert d'une couche absorbante dont le taux d'absorption n'est souvent pas uniforme. Le procédé et le miroir sphérique permettent d'irradier simultanément plusieurs faces d'un même objet, donnant un chauffage plus uniforme. Ceci explique qu'en plus d'un accroissement sensible de productivité on constate également une amélioration notable de la qualité.

**Revendications**

1. Procédé de trempe d'éléments semblables distincts, solidaires d'un support commun et régulièrement espacés les uns des autres, notamment des dents d'un organe denté, selon lequel avant de refroidir les pièces on forme un faisceau laser, on définit une trajectoire de déplacement desdits éléments, on dirige ce faisceau laser en un point de cette trajectoire et on renvoie la lumière réfléchie par ces éléments contre cette même trajectoire, caractérisé par le fait que l'on forme un miroir sur la face interne d'une sphère creuse (7), que l'on fait passer la trajectoire des éléments (4) à travers cette sphère par au moins une ouverture (8,9) située sur un diamètre de cette sphère coïncidant avec ladite trajectoire et on ménage une autre ouverture (6) qui se situe dans un plan diamétral contenant cette trajectoire, mais sur un rayon formant un angle oblique avec elle, on dirige, à travers cette autre ouverture, le faisceau laser (B) contre un point de cette trajectoire situé à une distance du centre de la sphère correspondant à une fraction de l'espace séparant lesdits éléments (4), pour conserver toutes les réflexions successives dudit faisceau à l'intérieur de la sphère et pour que l'ensemble de ces réflexions converge tantôt vers ce point de ladite trajectoire en venant alternativement de deux directions opposées après avoir traversé l'espace séparant deux desdits éléments adjacents, tantôt vers un second point, situé sur cette trajectoire, symétrique du premier point par rapport au centre de la sphère, suivant que l'un desdits éléments coupe ou non ledit faisceau (B) entrant dans la sphère avant que celui-ci rencontre la surface dudit miroir.

2. Procédé selon la revendication 1, caractérisé par le fait que l'on forme ledit faisceau laser (B) en lui donnant une section elliptique et que l'on dirige ce faisceau contre une face desdits éléments (4) en orientant la grand axe de ladite section elliptique parallèlement à la trajectoire desdits éléments.

3. Procédé selon la revendication 1, caractérisé par le fait que l' on préchauffe lesdits éléments (4) en amont ( 11) de l' endroit où l' on dirige ledit faisceau laser sur eux.

4. Dispositif pour la mise en oeuvre du procédé selon la revendication 1, comportant une source de rayonnement laser, des moyens optiques pour former un faisceau de lumière cohérente issue de cette source et pour diriger ce faisceau contre la trajectoire décrite par lesdits éléments, une surface-miroir pour capter la lumière réfléchie par la surface des éléments caractérisé en ce que la surface-miroir est formée sur la face interne d'une sphère creuse (7) comportant au moins une ouverture (8,9) située sur un diamètre de cette sphère coïncidant avec la trajectoire des éléments (4) à tremper, la sphère (7) comportant une autre ouverture (6) située dans un plan diamétral contenant cette trajectoire, mais sur un rayon formant un angle oblique avec elle, et destiné au passage du faisceau laser.

5. Dispositif selon la revendication 4, caractérisé par le fait que la sphère creuse (7) comporte une entrée (8) et une sortie (9) pour ledit support (5), la trajectoire dudit support passant sensiblement par le centre de ladite sphère.

6. Dispositif selon la revendication 5, caractérisé par le fait que ledit faisceau laser (B) est dirigé contre la surface du support (5) en formant un angle par rapport à la verticale abaissée sur ce support le centre du faisceau lumineux coupant la trajectoire du support à une distance, en amont ou en aval du centre de ladite sphère, de $\frac{1}{4}$ du pas séparant lesdits éléments (4).

**Patentansprüche**

1. Verfahren zum Härten von getrennte, gleichen Elementen, die mit einem gemeinsamen Träger einstückig sind und regelmäßige Abstande haben, insbesondere Zähne auf einem gezahnten Element, gemäß dem man vor dem Abkühlen der Teile ein Laserbündel bildet, man eine Bahn zur Verschiebung der Elemente

4

festlegt, man das Laserbündel auf einen Punkt dieser Bahn richtet und man das von diesen Elementen reflektierte Licht gegen diese Bahn lenkt, dadurch gekennzeichnet, daß man auf der Innenfläche einer Hohlkugel (7) einen Spiegel ausbildet, daß man die Bahn der Elemente (4) über mindestens eine Öffnung (8,9) durch diese Kugel führt, welche Öffnung auf einem Durchmesser dieser Kugel angeordnet ist, der mit der Bahn zusammenfällt und man eine andere Öffnung (6) einarbeitet, die sich in einer Diametralebene befindet, die diese Bahn enthält, jedoch auf einem Radius, der einen schiefen Winkel mit ihr bildet, daß man durch diese andere Öffnung das Laserbündel (B) gegen einen Punkt dieser Bahn richtet, der in einem Abstand zum Kugelmittelpunkt vorgesehen ist, der einem Bruchteil des die Elemente (4) trennenden Raumes entspricht, um alle folgenden Reflexionen des Bündels im Inneren der Kugel zu halten und daß damit die Gesamtheit dieser Reflexionen einerseits zu diesem Punkt der Bahn konvergiert, indem sie abwechselnd aus zwei entgegengesetzten Richtungen kommen, nachdem sie den die beiden benachbarten Elemente trennenden Raum durchquert haben, sowie zu einem zweiten Punkt auf dieser Bahn, symmetrisch zum ersten Punkt hinsichtlich des Kugelmittelpunktes, wobei eines dieser Elemente das Bündel (B) schneidet oder auch nicht, das in die Kugel eintritt, bevor dieses die Oberfläche des Spiegels erreicht.

2. Verfahren nach Anspruch 1, dadurch gekennzeichnet, daß man das Laserbündel (B) bildet, indem man ihm einen elliptischen Querschnitt gibt und daß man das Bündel gegen einen eine Oberfläche der Elemente (4) richtet, indem man die große Achse des elliptischen Querschnittes parallel zur Bahn der Elemente ausrichtet.

3. Verfahren nach Anspruch 1, dadurch gekennzeichnet, daß man die Elemente (4) oberhalb des Ortes (11), wo man das Laserbündel auf die richtet, vorerwärmt.

4. Vorrichtung zur Durchführung des Verfahrens nach Anspruch 1 mit einer Quell für einen Laserstrahlung, optischen Einrichtungen zur Bildung eines kohärenten Lichtbündels, das von dieser Quelle abgegeben wird und um dieses Bündel über die Elemente auf die beschriebene Bahn zu richten, einem Oberflächenspielen, um das durch die Oberfläche der Elemente reflektierte Licht aufzufangen, dadurch gekennzeichnet, daß die Spiegeloberfläche auf der Innenfläche einer Hohlkugel (7) ausgebildet ist, die wenigsten eine Öffnung (8,9) auf einem Durchmesser dieser Kugel vorsieht, mit der Bahn der zu härtenden Elemente (4) zusammenfällt, wobei die Kugel (7) einen andere Öffnung (6) in einer diametralen Ebene, die dieser Bahn enthält, aufweist, jedoch auf einem Radius, der einen schrägen Winkel mit ihr bildet und zum Durchtritt des Bündels bestimmt ist.

5. Vorrichtung nach Anspruch 4, dadurch gekennzeichnet, daß die Hohlkugel (7) einen Eingang (8) und einen Ausgang (9) für den Träger (5) hat, wobei die Bahn des Trägers im wesentlichen durch den Kugelmittelpunkt hindurchtritt.

6. Vorrichtung nach Anspruch 5, dadurch gekennzeichnet, daß das Laserbündel (B) zur Oberfläche des Trägers (5) gerichtet ist, der einen Winkel gegenüber der auf den Träger herabgezogenen Vertikalen hat, wobei der Mittelpunkt des Lichtbündels die Bahn des Trägers in einem Abstand oberhalb oder unterhalb des Kugelmittelpunktes schneidet, und zwar um einen Viertel des die Elemente (4) trennenden Abstandes.

## Claims

1. A method of hardening distinct, identical elements integral with a support and regularly spaced apart from one another, more particularly the teeth of a toothed member, according to which method, before cooling the elements, a laser beam is formed, a path of travel is formed for said elements, the laser beam is aimed at a point on this path and the light reflected by the said elements is returned against the same path, characterised in that a mirror is formed on the internal surface of a hollow sphere (7), the path of the elements (4 ) is caused to cross said sphere through at least one opening (8, 9) located on a diameter of said sphere coinciding with the path, and another opening (6) is provided, which is located in a diametral plane containing the path, but on a radius forming an oblique angle therewith, the laser beam (B) is directed through this other opening against a point of the path situated at a distance from the centre of the sphere corresponding to a fraction of the space between the elements (4) in order to trap all successive reflections of said beam within the sphere and so that all of these reflections converge either towards this point of the path when the reflections come, alternately, from two opposite directions after crossing the space between two adjacent elements, or towards a second point located on said path in symmetry to the first point in relation to the centre of the sphere, depending upon whether or not one of said elements intercepts the beam (B) entering the sphere before said beam strikes the surface of said mirror.

2. A method according to claim 1, characterised in that the said laser beam (B) is formed and is given an elliptical cross section, and is directed against one face of said elements (4) whilst orientating the greater axis of said elliptical cross section parallel to the travelling path of the elements.

3. A method according to claim 1, characterised in that the elements (4) are preheated at a place (11) upstream of where the beam is directed onto them.

4. A device for carrying out the method according to claim 1, comprising a laser beam source, optical means for forming a beam of coherent light issuing from said source and for directing said beam against the trajectory described by the elements, a mirror surface for collecting the light reflected by the surface of the elements, characterised in that the mirror surface is formed on the internal surface of a hol low sphere (7 ) comprising at least one opening (8, 9) located on a diameter of said sphere coinciding with the trajectory of the elements (4) to be hardened, the sphere (7) comprising a further opening (6) located in a diametral plane containing said trajectory, but on a radius forming an oblique angle therewith, and intended for the passage of the laser beam.

5. A device according to claim 4, characterised in that the hollow sphere (7) comprises an entrance (8) and an exit (9) for the support (5), the trajectory of said support substantially passing through the centre of the sphere.

6. A device according to claim 5, characterised in that the laser beam (B) is directed against the surface of the support (5) so as to form an angle relative to a vertical line falling on said support, the centre of the light beam intersecting the trajectory of the support at a distance upstream or downstream of the centre of the sphere corresponding to 1/4 of the pitch between said elements (4).

FIG. 1

FIG. 2a

FIG. 2b

FIG. 3